Europäisches Patentamt

European Patent Office

Office européen des brevets

(19)

(11) Veröffentlichungsnummer : **0 162 123 B2**

(12) **NEUE EUROPÄISCHE PATENTSCHRIFT**

(45) Veröffentlichungstag der neuen Patentschrift :
**04.03.92 Patentblatt 92/10**

(51) Int. Cl.$^5$ : **H04N 3/16,** H04N 3/22

(21) Anmeldenummer : **84105866.2**

(22) Anmeldetag : **23.05.84**

(54) Verfahren und Schaltungsanordnung zur digitalen Ablenkkorrektur von Fernsehbildröhren.

(43) Veröffentlichungstag der Anmeldung :
**27.11.85 Patentblatt 85/48**

(45) Bekanntmachung des Hinweises auf die
Patenterteilung :
**03.08.88 Patentblatt 88/31**

(45) Bekanntmachung des Hinweises auf die
Entscheidung über den Einspruch :
**04.03.92 Patentblatt 92/10**

(84) Benannte Vertragsstaaten :
**DE FR GB IT NL**

(56) Entgegenhaltungen :
**EP-A- 0 051 092**
**EP-A- 0 110 282**
**GB-A- 1 441 034**
**GB-A- 2 101 459**
**US-A- 4 282 546**
**ELECTRONICS, 11. August 1981, Seiten**
**97-103, New York, USA; T. FISCHER: "Digital**
**VLSI breeds next-generation TV receivers"**

(73) Patentinhaber : **Deutsche ITT Industries GmbH**
**Hans-Bunte-Strasse 19 Postfach 840**
**W-7800 Freiburg i.Br. (DE)**

(72) Erfinder : **Schweer, Rainer, Dr.**
**Lärchenweg 14**
**W-7808 Waldkirch (DE)**

## Beschreibung

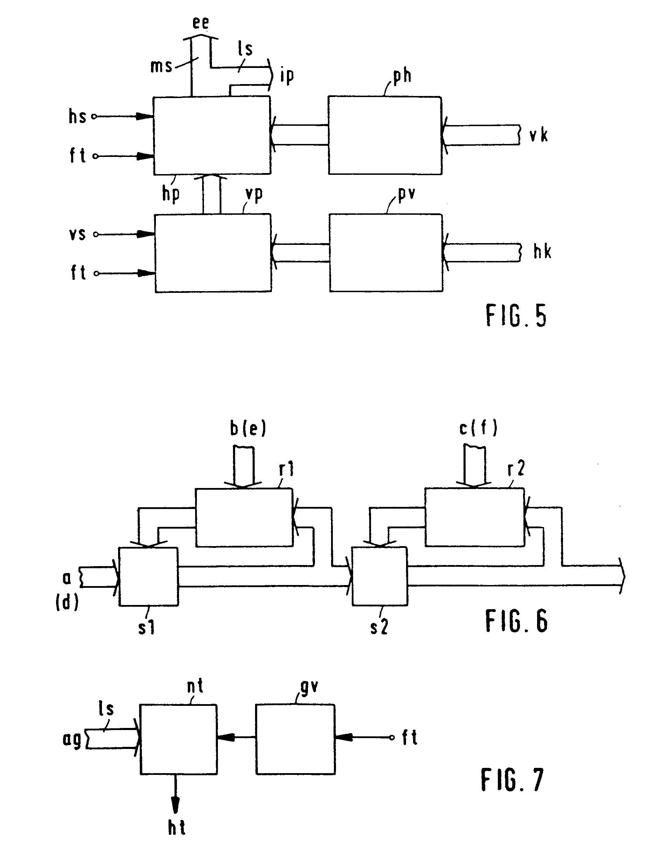

Die Erfindung betrifft Schaltungsanordnungen zur digitalen Ablenkkorrektur von Fernsehbildröhren, die über Digital-Analog-Wandler von mittels eines Videoprozessors digital aufbereiteten Videosignalen angesteuert sind, dem das mittels eines Taktsignals digitalisierte Farb-Bild-Synchron-Signal-Gemisch ( = FBAS-Signal) eingangsseitig zugeführt ist, und bei denen der Horizontal- und der Vertikalablenkung jeweils ein von einem Horizontal- bzw. Vertikalsynchronimpuls zeilen- bzw. halbbildweise getriggerter, ein noch zu korrigierendes Sägezahnsignal erzeugender Horizontal- bzw. Vertikaloszillator dient, vgl. die Oberbegriffe der Ansprüche 1 und 3. Fernsehempfänger, insbesondere Farbfernsehempfänger, mit digitaler Verarbeitung des FBAS-Signals sind z.B. in der Zeitschrift "Electronics", 11. August 1981, Seiten 97 bis 103 beschrieben. Insbesondere auf Seite 101 in Verbindung mit der auf dieser Seite abgedruckten Fig. 5 ist die seit den Anfangszeiten der Fernsehtechnik übliche Geometriekorrektur beschrieben, die bei üblichen Fernsehbildröhren dadurch erforderlich ist, daß der Bildschirm keine Kugelfläche ist. Wie bei üblichen Fernsehgeräten ist auch bei den vorbeschriebenen Fernsehgeräten mit digitaler Signalverarbeitung die Geometriekorrektur dadurch erreicht, daß das Horizontal- und das Vertikalablenksignal entsprechend korrigiert werden, was in der Fachwelt auch unter der Bezeichnung Parabelkorrektur geläufig ist.

Diese Art der Geometriekorrektur ist jedoch nur bis zu einem gewissen Ausmaß mit vernünftigem Aufwand realisierbar, so daß insbesondere am Bildschirmrand ein Fehler zugelassen werden muß, der im allgemeinen sichtbar ist. Hinzu kommt, daß die Geometriekorrektur üblicher Art nicht nur durch elektrische Beeinflussung des elektrischen Ablenksignals sondern zusätzlich auch noch durch magnetische Beeinflussung des von den Ablenkspulen erzeugten Magnetfelds vorgenommen werden muß.

Aus GB-A-1 441 034 ist eine Schaltungsanordnung zur Konvergenzkorrektur in Farbfernsehempfängern bekannt, bei der die analogen R-, G-, B-Bildsignale mittels Speichereinrichtungen vor der Bildwiedergabe zeitlich unterschiedlich verzögert werden, um die Konvergenzfehler der drei R-, G-, B-Bildsignale auszugleichen. Als Speichereinrichtungen werden dabei sowohl analoge als auch digitale Schieberegister angegeben, wobei der digitalen Speicherung eine Analog-Digitalumsetzung vorausgeht und entsprechend eine Rückumsetzung folgt. Die analogen Schieberegister sind beispielsweise mittels ladungsgekoppelter Zellen und die digitalen Schieberegister mittels digitaler Speicherzellen für drei parallele Binärstellen realisiert. Die Steuerung der Verzögerungszeit bei der analogen und digitalen Schieberegistern erfolgt über die Frequenz des jeweiligen Schiebetaktes. Dieser wird durch einen spannungsgesteuerten Oszillator gebildet, dessen geregelter Steuerspannung ein Signal mit der jeweiligen Korrekturfunktion aus einem Korrekturfunktionsgenerator überlagert wird. Eine Geometriekorrektur zur Entzerrung der Bildschirmwiedergabe ist bei dieser Konvergenzkorrektur nicht vorgesehen.

Der in den Ansprüchen 1 und 3 gekennzeichneten Erfindung liegt daher die Aufgabe zugrunde, vom bisherigen Grundprinzip der Geometriekorrektur abweichende neue Schaltungsanordnungen anzugeben, mit denen sich eine insgesamt bessere Korrektur auch an den Bildschirmrändern erreichen läßt und andererseits auf zusätzliche magnetische Korrekturmaßnahmen verzichtet werden kann.

Ein Vorteil der Erfindung besteht somit darin, daß die Geometriekorrektur mit rein elektronischen Mitteln erreicht wird und daß diese elektronischen Mittel ohne weiteres in Form integrierter Schaltungen realisierbar sind.

Die Erfindung wird nun anhand der Figuren der Zeichnung näher erläutert.

Fig. 1 zeigt schematisch in Form eines Blockschaltbilds ein Ausführungsbeispiel einer ersten Schaltungsanordnung entsprechend der Erfindung,

Fig. 2 zeigt blockschaltbildmäßig als Ausführungsbeispiel eine zweite Schaltungsanordnung entsprechend der Erfindung,

Fig. 3 zeigt schematisch den Verlauf der horizontalen Geometrieabweichungen einer Bildröhre,

Fig. 4 zeigt das Blockschaltbild eines Ausführungsbeispiels des bei der Anordnung nach Fig. 1 verwendeten Interpolators,

Fig. 5 zeigt das Blockschaltbild eines Ausführungsbeispiels eines bei der Erfindung verwendeten Adreßgenerators,

Fig. 6 zeigt schematisch das Schaltbild eines Ausführungsbeispiels für einen bei der Erfindung werwendeten Parabelgenerator, und

Fig. 7 zeigt das Schaltbild eines Ausführungsbeispiels des bei der Anordnung nach Fig. 2 verwendeten nichtganzzahligen Frequenzvervielfachers.

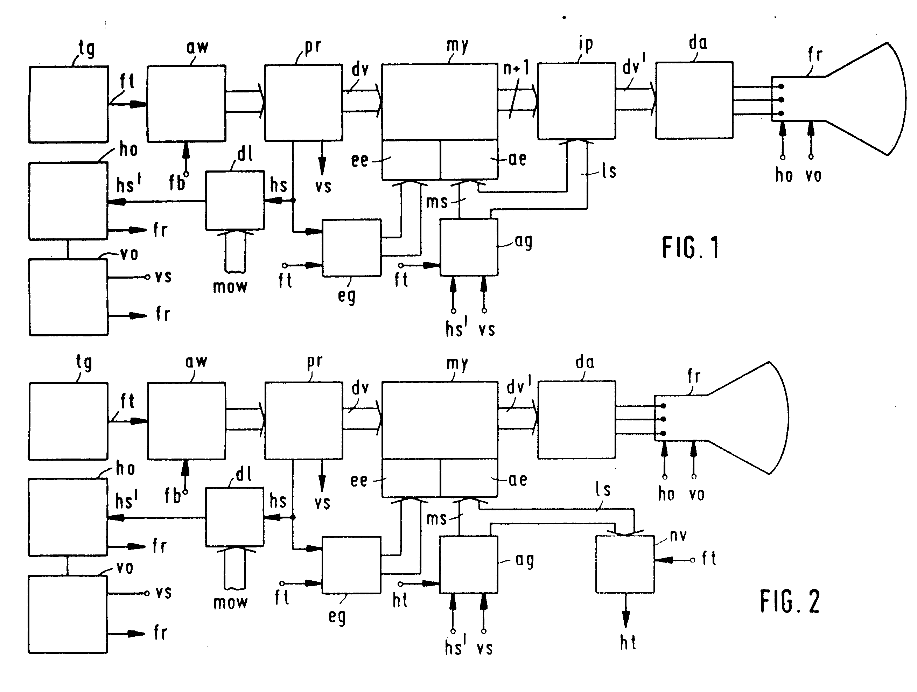

Anhand des schematischen Blockschaltbilds der Fig. 1 soll zunächst die der Erfindung innewohnende Grundidee erläutert werden. Danach wird die Ablenkkorrektur der Fernsehbildröhre fr dadurch erreicht, daß die vom Horizontal- bzw. Vertikaloszillator ho, vo erzeugten Sägezahnsignale, die im allgemeinen eine lineare Spannungs-Zeit-Charakteristik haben, unverändert, d.h. unkorrigiert bleiben und daß pro Zeile die zeitliche

2

Lage der die Digital-Analog-Wandler da ansteuernden digitalen Videosignale dv′ bezüglich der zeitlichen Lage der mittels des Videoprozessors pr aufbereiteten Videosignale dv um den von der jeweiligen örtlichen Lage eines Bildpunktes auf dem Bildschirm der Bildröhre fr abhängigen Korrekturwert geändert wird. Die Geometriekorrektur erfolgt also im Gegensatz zu den in der Regel üblichen Verfahren nicht durch Korrektur der Ablenksignale, sondern durch Beeinflussung der zeitlichen Lage der digitalen Videosignale im Hinblick auf die gewünschte Korrektur. Dies geschieht nach einer bevorzugten Ausführungsform des Verfahrens der Erfindung dadurch, dass der Horizontalsynchronimpuls hs mindestens um die der maximalen Ost-West-Abweichung mow entsprechende Zeitdauer verzögert und erst dann als verzögerter Horizontalsynchronimpuls hs′ dem Horizontaloszillator ho zugeführt wird. Ferner werden bei dieser Ausführungsform die aufbereiteten Videosignale dv in den über Ein- und Ausleseadressen adressierbaren Speicher my mit der Frequenz des Taktsignals ft eingelesen und daraus mit derselben Frequenz synchron ausgelesen, und die so erhaltenen Videosignale werden in ihrer Amplitude durch Interpolation mittels des Interpolators ip korrigiert.

Nach einer zweiten bevorzugten Ausführungsform werden die aufbereiteten Videosignale dv in den über Ein- und Ausleseadressen adressierbaren Speicher my mit der Frequenz des Taktsignals ft eingelesen und daraus derart ausgelesen, dass die Ausleseadressen mit entsprechend dem Korrekturwert erhöhter Frequenz ht aktiviert und die so korrigierten Videosignale dv′ den Digital-Analog-Wandlern da zugeführt werden.

Der erwähnten ersten bevorzugten Ausführungsform liegt dabei die Schaltung nach Fig. 1 und der zweiten bevorzugten Ausführungsform die Schaltung nach Fig. 2 zugrunde. In beiden Figuren sind gleiche Teilschaltungen mit gleichen Bezugszeichen versehen, so dass die folgende Beschreibung für beide Figuren zutreffend ist, soweit gleiche Teile betroffen sind.

Der Analog-Digital-Wandler aw wandelt das ihm analog zugeführte FBAS-Signal fb im Takt des vom Taktgenerator tg erzeugten Taktsignals ft in parallele Digitalwörter um, die im Takt des Taktsignals ft von den weiteren Schaltungsteilen weiterverarbeitet werden. Die Frequenz des Taktsignals ft ist dabei ein ganzzahliges Vielfaches der Farbträgerfrequenz, vorzugsweise deren Vierfaches.

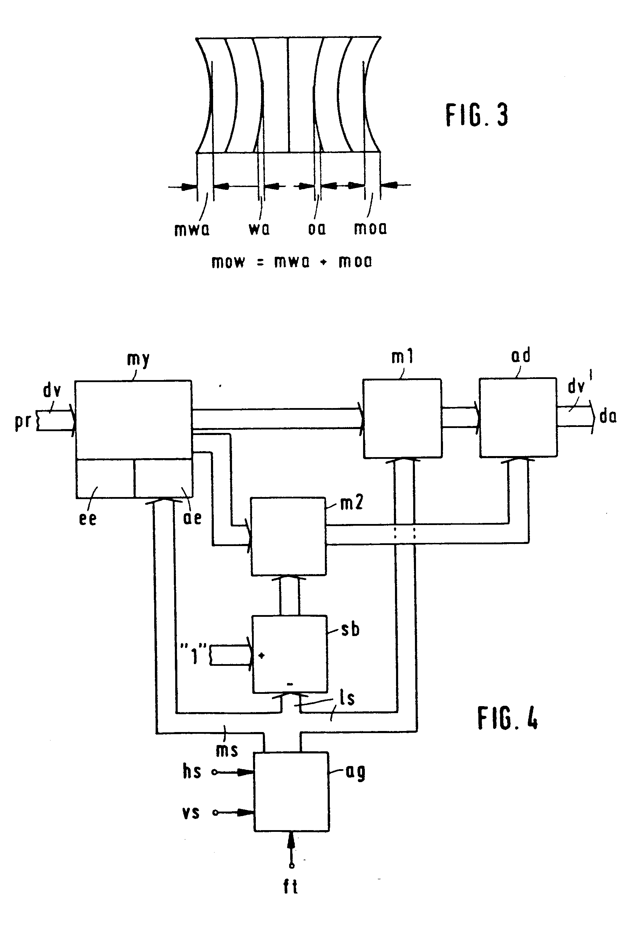

Die Ausgangssignale des Analog-Digital-Wandlers aw sind dem Videoprozessor pr zugeführt, der unter anderem die Horizontal- bzw. Vertikalsynchronisierimpulse hs, vs aus dem FBAS-Signal separiert. Die Horizontalsynchronimpulse hs sind mittels der Verzögerungsstufe dl, deren Verzögerungszeit gleich der maximalen Ost-West-Abweichung mow (vgl. Fig. 3) ist, verzögert und erst dann dem Horizontaloszillator ho als verzögerte Horizontalsynchronimpulse hs′ zugeführt, der seinerseits die Ablenkmittel der Bildröhre fr ansteuert.

Die Vertikalsynchronimpulse vs sind dem Vertikaloszillator vo zugeführt, dessen Nennfrequenz beispielsweise durch Frequenzteilung aus der Nennfrequenz des Horizontaloszillators ho abgeleitet sein kann, vgl. die eingezeichnete Verbindung zwischen den beiden Oszillatoren, und dessen Ausgang die Vertikalablenkmittel der Bildröhre fr ansteuern.

Die aufbereiteten Videosignale dv sind dem über Ein- und Ausleseadressen adressierbaren Speicher my zugeführt, dessen Einlese-Adress-Eingang ee mit dem Ausgang des vom Taktsignal ft und vom Horizontalsynchronimpuls hs als Rücksetzimpuls getakteten Einleseadressgenerator eg und dessen Auslese-Adress-Eingänge ae mit dem Ausgang des vom Taktsignal ft synchron und vom verzögerten Horizontalsynchronimpuls hs′ als Rücksetzimpuls getakteten Auslese-Adress-Generators ag verbunden sind. Der Einlese-Adress-Generator eg kann beispielsweise mittels eines Zählers, insbesondere eines Binärzählers, realisiert sein, der die Impulse des Taktsignals ft zählt und dessen Zählerstände direkt als Einlese-Adressen dienen.

In Fig. 1 ist mit dem Eingang des Interpolators ip, der n-ten Grades ist (n ganzzahlig grösser null), der Ausgang des Speichers my mittels n+1 paralleler Busse verbunden, auf denen auf eine Adresse hin der zugeordnete Speicherwert und die den n folgenden Adressen zugeordneten Speicherwerte gleichzeitig an den Interpolator ip ausgelesen werden. In den beiden einfachsten Fällen ist der Interpolator ip somit ein linearer bzw. quadratischer und es sind, da n = 1 bzw. 2 ist, zwei bzw. drei Busse vorhanden. Vom Auslese-Adress-Generator ag erhält er als Interpolationskennwert die über die Adress-Stellenzahl ms auf der niederwertigen Seite hinausgehenden Stellen ls von dessen Ausgangssignal zugeführt.

Die die Digital-Analog-Wandler da ansteuernden digitalen Videosignale dv′ treten in Fig. 1 am Ausgang des Interpolators ip auf und steuern nach Umwandlung in Analogsignale die Bildröhre fr an.

Bei der Variante nach Fig. 2 ist auf den Interpolator ip nach Fig. 1 verzichtet, und der Speicher my ist über einen einzigen Bus mit den Digital-Analog-Wandlern da verbunden. Der Auslese-Adress-Generator ag steuert mit den auf der niederwertigen Seite liegenden und über die Adressstellenzahl ms hinausgehenden Stellen ls seines Ausgangssignals den nichtganzzahligen Frequenzvervielfacher nv an, der aus dem Taktsignal ft das entsprechend höherfrequente Hilfstaktsignal ht erzeugt und dessen nichtganzzahliger Multiplikator m dabei zu den Stellen ls proportional ist; im einfachsten Fall kann er gleich diesen Stellen sein.

In Fig. 3 ist schematisch angedeutet, wie die horizontalen Geometrieabweichungen des Bildschirms der Bildröhre fr rechnerisch erfasst werden können. Die horizontale Abweichung der linken Bildschirmhälfte ist dabei als West-Abweichung wa und die entsprechende der rechten Bildhälfte als Obstabweichung oa bezeichnet, wobei beide Abweichungen für jeden Bildpunkt des Bildschirms einen anderen Wert haben. Als maximale Ost-West-Abweichung mow ist die Summe aus maximaler West-Abweichung mwa und maximaler Ost-Abweichung moa definiert, welch letztere für die linke oberste oder unterste bzw. rechte oberste oder unterste Bildecke gelten.

Die Fig. 4 zeigt nun ein bevorzugtes Ausführungsbeispiel für einen Interpolator ersten Grades, also einen linearen, zur Verwendung in Verbindung mit Fig. 1 (n = 1, n+1 = 2). In Fig. 4 sind lediglich die dem Interpolator zugeordneten Teilschaltungen my, ag aus Fig. 1 gezeigt. Der Ausgang des Speichers my für den ersten Speicherwert liegt über den ersten Bus am Eingang des ersten Multiplizierers m1, dessen zweitem Eingang die niederwertigen Stellen ls des Ausgangssignals des Auslese-Adress-Generators ag zugeführt sind und dessen Ausgang am ersten Eingang des Addierers ad liegt, an dessen Ausgang die die Digital-Analog-Wandler da ansteuernden digitalen Videosignale dv′ auftreten. Der erste Eingang des zweiten Multiplizierers m2 liegt über den zweiten Bus am Ausgang des Speichers my für den zweiten Speicherwert und sein zweiter Eingang liegt am Ausgang des Subtrahierers sb, dessen Minuend-Eingang die Zahl Eins « 1 » und dessen Substrahend-Eingang die niederwertigen Stellen ls des Ausgangssignals des Auslese-Adress-Generators ag zugeführt sind. Der Ausgang des zweiten Multiplizierers m2 ist mit dem zweiten Eingang des Addierers ad verbunden.

Die Videospiele dv′, die synchron zu den in den Speicher my eingelesenen Videosignalen dv auftreten, sind also so interpoliert, dass ihre Amplitude am Auftreffort des Elektronenstrahls auf dem Bildschirm trotz dessen Abweichung von einer Kugelfläche den gewünschten « richtigen » Bildeindruck erzeugt.

Nach Fig. 5 erzeugt der Auslese-Adress-Generator nach den Fig. 1 und 2 mittels des digitalen Horizontalparabel- bzw. digitalen Vertikalparabel-Generators ap, vp, die vom Horizontalsynchron- bzw. Vertikalsynchronimpuls hs, vs jeweils zurückgesetzt werden und vom Taktsignal ft getaktet sind, das aus den Teilen ms, ls bestehende Ausgangssignal.

Mit den Parabelgeneratoren hp, vp steht jeweils der entsprechende vom Fernsehgerätehersteller programmierbare erste bzw. zweite Festwertspeicher ph, pv in Verbindung, die die drei Horizontal-Bildschirmmitten-Parabel bestimmenden Koeffizienten a, b, c und deren vertikalrichtungsabhängige Korrekturwerte vk bzw. die drei die Vertikal-Bildschirmmitten-Parabel bestimmenden Koeffizienten e, f, g und deren horizontalrichtungsabhängige Korrekturwerte hk enthalten.

Zur Erzeugung der erwähnten Bildschirmmitten-Parabeln kann nach Fig. 6 bevorzugt eine Teilschaltung verwendet werden, die den ersten bzw. zweiten Summierer s1, s2 sowie das erste bzw. zweite Verzögerungsregister r1, r2 enthält. Dem ersten Summierer s1 ist der Koeffizienzt a bzw. d und über das erste Verzögerungsregister r1 dessen Ausgangssignal zugeführt, wobei in letzteres der Koeffizient b bzw. e geladen ist.

Der zweite Summierer s2 erhält als das eine Eingangssignal das Ausgangssignal des ersten Summierers s1 und als zweites Eingangssignal sein eigenes Ausgangssignal über das zweite Verzögerungsregister r2 zugeführt, wobei in letzteres der Koeffizient c bzw. f geladen ist. Die Verzögerungszeit der Verzögerungsregister r1, r2 ist gleich der Periodendauer des Taktsignals ft. Die Korrekturwerte hk, vk sind als additive und/oder multiplikative Korrekturen der Koeffizienten a, b, c bzw. e, f, g in den Festwertspeichern ph, pv abgelegt.

Die Fig. 7 zeigt eine bevorzugte Ausführungsform für den nichtganzzahligen Frequenzvervielfacher nv mit dem nichtganzen Multiplikator m. Er besteht aus dem ganzzahligen Frequenzvervielfacher gv mit dem ganzzahligen Faktor g und dem ihm nachgeschalteten nichtganzzahligen Frequenzteiler nt mit der nichtganzen Teilungszahl p, dem die Stellen ls des Auslese-Adress-Generators ag zugeführt sind und an dessen Ausgang das Hilfstaktsignal ht auftritt. Für die erwähnten Zahlen m, g, p gilt somit folgende Beziehung: m = g/p. Als nichtganzzahliger Frequenzteiler kann beispielsweise eine Anordnung nach der veröffentlichten europäischen Anmeldung EP 80 970 dienen.

Wie oben bei der Erläuterung einiger Vorteile der Erfindung schon erwähnt wurde, lässt sie sich besonders vorteilhaft in Form integrierter Halbleiterschaltungen realisieren. Da sie ausschliesslich nach digitalen Schaltungsprinzipien arbeitet, sind die für digitale Signalverarbeitung üblichen Halbleiterschaltungsfamilien anwendbar, wovon insbesondere die sogenannten MOS-integrierten Schaltungen anwendbar sind, d.h. integrierte Isolierschicht-Feldeffekt-Transistorschaltungen. Die Erfindung ist ferner besonders geeignet, in Verbindung mit den entsprechend der eingangs genannten Literaturstelle für die digitale Signalverarbeitung in Fernsehempfängern entwickelten Digitalschaltungen angewendet zu werden, d.h. in das für derartige Schaltungen bestehende Schaltungskonzept einbezogen zu werden. In einem solchen Fall kann dann der übliche Ablenkprozessor sehr einfach ausgebildet werden, d.h. er braucht im Prinzip lediglich ein einfacher getriggerter Sägezahnoszillator zu sein.

## Patentansprüche

1. Schaltungsanordnung zur digitalen Ablenkkorrektur von Fernsehbildröhren (fr), die über die Digital-Ana-

EP 0 162 123 B2

log-Wandler (da) von mittels eines Videoprozessors (pr) digital aufbereiteten Videosignalen (dv) angesteuert sind, dem das mittels eines Taktsignals (ft) digitalisierte Farb-Bild-Synchron-Signal-Gemisch ( = FBAS-Signal) (fb) eingangsseitig zugeführt ist, und bei denen der Horizontal- und der Vertikalablenkung jeweils ein von einem Horizontal- bzw. Vertikalsynchronimpuls (hs, vs) zeilen- bzw. halbbildweise getriggerter, ein noch zu korrigierendes Sägezahnsignal erzeugender Horizontal- bzw. Vertikaloszillator (ho, vo) dient, gekennzeichnet durch folgende Merkmale:

– der Horizontalsynchronimpuls (hs) ist über eine Verzögerungsstufe (dl), deren Verzögerungszeit mindestens gleich der maximalen Ost-West-Abweichung (mow) ist, dem Horizontaloszillator (ho) zugeführt, dessen Sägezahnsignal an der Bildröhre (fr) liegt,

– die aufbereiteten Videosignale (dv) sind einem über Ein- und Ausleseadressen adressierbaren Speicher (my) zugeführt, dessen Einlese-Adress-Eingang (ee) mit dem Ausgang eines vom Taktsignal (ft) und vom Horizontalsynchronimpuls (hs) als Rücksetzimpuls getakteten Einlese-Adress-Generators (eg) und dessen Auslese-Adress-Eingänge (ae) mit dem Ausgang eines vom Taktsignal (ft) synchron und vom am Ausgang der Verzögerungsstufe (dl) auftretenden verzögerten Horizontalsynchronimpuls (hs') als Rücksetzimpuls getakteten Auslese-Adress-Generators (ag) verbunden sind,

– dieser enthält einen digitalen Horizontalparabel- und einen mit diesem verbundenen digitalen Vertikalparabel-Generator (hp, vp), die vom Horizontalsynchron- bzw. Vertikalsynchronimpuls (hs, vs) jeweils zurückgesetzt werden, und einen vom Fernsehgerätehersteller programmierbaren ersten und zweiten Festwertspeicher (ph, pv) für die drei die Horizontal-Bildschirmmitten-Parabel bestimmenden Koeffizienten (a, b, c) und deren vertikalrichtungsabhängige Korrekturwerte (vk) bzw. für die drei die Vertikal-Bildschirmmitten-Parabel bestimmenden Koeffizienten (e, f, g) und deren horizontalrichtungsabhängige Korrekturwerte (hk),

– dem Speicher (my) ist ein Interpolator (ip) n-ten Grades (n ganzzahlig grösser null) nachgeschaltet, als dessen Interpolationskennwert die über die Adress-Stellenzahl (ms) auf der niederwertigen Seite hinausgehenden Stollen (ls) des Ausgangssignals des Auslese-Adress-Generators (ag) diesen und dessen Ausgang mit den Digital-Analog-Wandlern (da) vebunden ist, und

– der Speicher (my) gibt mittels n+1 paralleler Busse auf eine Adresse hin den zugeordneten Speicherwert und die den folgenden Adressen zugeordneten Speicherwerte gleichzeitig an den Interpolator (ip) n-ten Grades ab.

2. Schaltungsanordnung nach Anspruch 4, dadurch gekennzeichnet, dass der Interpolator (ip) vom ersten Grad (n=1) ist und folgende Stufen enthält:

– einen ersten Multiplizierer (m1), dessen erster Eingang über den ersten Bus am Ausgang des Speichers (my) für den ersten Speicherwert und dessen Ausgang am ersten Eingang eines Addierers (ad) liegt,

– einen zweiten Multiplizierer (m2), dessen erster Eingang über den zweiten Bus am Ausgang des Speichers (my) für den zweiten Speicherwert angeschlosen ist, und

– einen Subtrahierer (sb), dessen Minuendeingang die Zahl Eins (« 1 ») und dessen Subtrahendeingang zusammen mit dem zweiten Eingang des ersten Multiplizierers (m1) die niederwertigen Stellen (ls) des Ausgangssignals des Auslese-Adress-Generators (ag) zugeführt sind und dessen Ausgang am zweiten Eingang des zweiten Multiplizierers (m2) liegt, dessen Ausgang mit dem zweiten Eingang des Addierers (ad) verbunden ist.

3. Schaltungsanordnung zur digitalen Ablenkkorrektur von Fernsehbildröhren (fr), die über Digital-Analog-Wandler (da) von mittels eines Videoprozessors (pr) digital aufbereiteten Videosignalen (dv) angesteuert sind, dem das mittels eines Taktsignals (ft) digitalisierte Farb-Bild-Synchron-Signalgemischs (= FBAS-Signal) (fb) eingangsseitig zugeführt ist, und bei denen der Horizontal- und der Vertikalablenkung jeweils ein von einem Horizontal- bzw. Vertikalsynchronimpuls (hs, vs) zeilen- bzw. halbbildweise getriggerter, ein noch zu korrigierendes Sägezahnsignal erzeugender Horizontal- bzw. Vertikaloszillator (ho, vo) dient, gekennzeichnet durch folgende Merkmale:

– die aufbereiteten Videosignale (dv) sind einem über Ein- und -Ausleseadressen adressierbaren Speicher (my) zugeführt, dessen Ausgang mit dem Digital-Analog-Wandler (da) verbunden ist, dessen Einlese-Adress-Eingang (ee) mit dem Ausgang eines vom Taktsignal (ft) und vom Horizontalsynchronimpuls (hs) als Rücksetzimpuls getakteten Einlese-Adress-Generators (eg) und dessen Auslese-Adress-Eingänge (ae) mit dem Ausgang eines von einem höherfrequenten Hilfstaktsignal (ht) getakteten Auslese-Adress-Generators (ag) verbunden sind,

– dieser enthält einen digitalen Horizontalparabel- und einen mit diesem verbundenden digitalen Vertikalparabel-Generator (hp, vp), die vom Horizontalsynchron- bzw. Vertikalsynchronimpuls (hs, vs) jeweils zurückgesetzt werden, und einen vom Fernsehgerätehersteller programmierbaren ersten und zweiten Festwertspeicher (ph, pv) für die drei die Horizontal-Bildschirmmitten-Parabel bestimmenden Koeffizienten a, b, c und deren vertikalrichtungsabhängige Korrekturwerte (vk) bzw. für die drei die Vertikal-Bildschirmmit-

5

ten-Parabel bestimmenden Koeffizienten e, f, g und deren horizontalrichtungsabhängige Korrekturwerte (hk), und das höherfrequente Hilfstaktsignal (ht) ist mittels eines nichtganzzahligen Frequenzvervielfachers (nv) erzeugt, dessen nichtganzer Multiplikator (m) zu den über die Adressstellenzahl (ms) auf der niederwertigen Seite hinausgehenden Stellen (ls) des Ausgangssignals des Auslese-Adress-Generators (ag) proportional ist.

4. Schaltungsanordnung nach Anspruch 6, dadurch gekennzeichnet, dass zur Realisierung des nichtganzen Multiplikators (m) der nichtganzzahlige Frequenzvervielfacher (nv) aus einem ganzzahligen (g) Frequenzvervielfacher (gv) und einem nachgeschalteten nichtganzzahligen (p) Frequenzteiler (nt) besteht, so dass gilt: m = g/p.

5. Schaltungsanordnung nach Anspruch 4 oder 6, gekennzeichnet durch folgende Merkmale:
– ein Parabel-Generator (hp, vp) enthält einen ersten Summierer (s1), dessen einem Eingang der Koeffizient a bzw. d dauernd zugeführt ist und dessen Ausgang über ein mit dem Koeffizienten b bzw. e geladenes erstes Verzögerungsregister (r1) mit dem eigenen Eingang verbunden ist, und einen zweiten Summierer (s2), dessen Ausgang über ein mit dem Koeffizienten c bzw. f geladenes zweites Verzögerungsregister (r2) mit seinem einen Eingang und dessen anderer Eingang mit dem Ausgang des ersten Summierers (s1) verbunden ist,
– die Verzögerungszeit der Verzögerungsregister (r1, r2) ist gleich der Periodendauer des Taktsignals (ft), und
– die Korrekturwerte (hk, vk) sind als additive und/oder multiplikative Korrekturen der Koeffizienten a, b, c bzw. d, e, f in den Festwertspeichern (ph, pv) abgelegt.

## Claims

1. A circuit for the digital deflection correction of television picture tubes (fr) which are controlled via digital-to-analog converters (da) by means of video signals (dv) which are digitally reconditioned with the aid of a video processor (pr), to the input side of which the composite color signal (fb) as digitalized with the aid of a clock signal (ft) is fed, and in which each time a horizontal or vertical oscillator (ho, vo) which is triggered in a lire- or fieldwise manner by a horizontal or vertical sync pulse (hs, vs), and producing a sawtooth signal still to be corrected, serves the horizontal and the vertical deflection purpose respectively, characterized by the following features:
– the horizontal sync pulse (hs), via a delay line stage (dl) whose time delay is at least equal to the maximum east-west distortion (mow), is fed to the horizontal oscillator (ho) whose sawtooth signal is applied to the picture tube (fr),
– the reconditioned video signals (dv) are fed to a memory (my) which is addressable via read-in and read-out addresses, with the read-in adress input (ee) thereof being connected to the output of a read-in address generator (eg) which is triggered by the clock signal (ft) and by the horizontal sync pulse (hs) as a reset pulse, and with the read-out address inputs (ae) thereof being connected to the output of a read-out address generator (ag) which is clocked synchronously by the clock signal (ft) and by the delayed horizontal sync pulse (hs') as the reset pulse appearing at the output of the delay-line stage (dl),
– the latter contains a digital horizontal parabola-, and a digital vertical parabola generator connected thereto (hp, vp), which are each reset by the horizontal sync pulse or the vertical sync pulse (hs, vs) respectively, and a first and a second read-only memory (ph, pv) as programmable by the television set manufacturer, for the three coefficients (a, b, c) which are determinative of the horizontal center-of-screen parabola and their vertical-direction-dependent correcting values (vk), or for the three coefficients (e, f, g) which are determinative of the vertical center-of-screen parabola, and their horizontal-direction-dependent correcting values (hk),
– the memory (my) is subsequently followed by an interpolator (ip) of the nth grade (n integer and greater than zero), with the digits (ls) of the output signal of the read-out address generator (ag) exceeding the address positional number (ms) on the low order side serving as the interpolation performance characteristic thereof, and the output of which is connected to the digital-to-analog converters (da), and
– the memory (my), by means of n+1 parallel buses, and in response to an address, forwards the associated storage (memory) value and the storage (memory) values associated with the following addresses, simultaneously to the interpolator (ip) of the nth order.

2. A circuit as claimed in claim 1, characterized in that the interpolator (ip) is of the first order (n=1) and contains the following stagers:
– a first multiplier (m1) whose first input , via the first bus, is connected to the output of the memory (my) for the first storage (memory) value, and whose output is connected to the first input of an adder (ad),

– a second multiplier (m2) whose first input, via the second bus, is connected to the output of the memory (my) for the second storage (memory) value, and

– a subtracter (sb) to the minuend input of which the number one ("1"),and to the subtrahend input of which, together with the second input of the first multiplier (m1) there are fed the low-order digits (ls) of the output signal of the read-out address generator (ag), and with the output thereof being connected to the second input of the second multiplier (m2) whose output is connected to the second input of the adder (ad).

3. A circuit for the digital deflection correction of television picture tubes (fr) which are controlled via digital-to-analog converters (da) by video signals (dv) which are digitally reconditioned by means of a video processor (pr) to the input side of which the composite color signal (fb) digitalized with the aid of a clock signal (ft) is fed, and in which a horizontal or vertical oscillator (ho, vo) which is triggered in a line- or fieldwise manner by a horizontal or vertical sync pulse (hs, vs), and producing a sawtooth signal still to be corrected, serves the horizontal and the vertical deflection purpose, respectively, <u>characterized by the following features</u>:

– the reconditioned video signals (dv) are fed to a memory (my) which is addressable via read-in and read-out addresses, with the output thereof being connected to the digital-to-analog converter (da), with the read-in address input (ee) being connected to the output of a read-in address generator (eg) clocked by the clock signal (ft) and by the horizontal sync pulse (hs) as the reset pulse, and with the read-out address inputs (ae) thereof being connected to the output of a read-out address generator (ag) which is clocked by a higher-frequency auxiliary clock signal (ht), with

– this containing a digital horizontal parabola and a digital vertical parabola generator (hp, vp) connected thereto, which are each reset by the horizontal sync pulse or the vertical sync pulse (hs, vs) respectively, and a first and second read-only memory (ph, pv) programmable by the television set manufacturer, for the three coefficients (a, b, c) determinative of the horizontal center-of-screen parabola and their vertical direction-dependent-correcting values (vk) or fer the three coefficients (e, f, g) determinative of the vertical center-of-screen parabola, and their horizontal-direction-dependent correcting values (hk), and

– the higher-frequency auxiliary clock signal (ht) being produced with the aid of a non-integer frequency multiplier (nv) whose non-integer factor (m) is in proportion to the digits (ls) of the output signal of the read-out address generator (ag) exceeding the number of address digits (ms) on the low-order side.

4. A circuit as claimed in claim 3, characterized in that for realizing the non-integer factor (m), the non-integer frequency multiplier (nv) consists of an integer (g) frequency multiplier (gv) and of a subsequently arranged non-integer (p) frequency divider (nt), so that the following applies: m = g/p.

5. A circuit as claimed in claim 1 or 3, characterized by the following features:

– a parabola generator (hp, vp) contains a first summer (s1) to the one input of which the coefficient a or d is permanently applied, and with the output thereof, via a first delay-line register (r1) which is charged with the coefficient b or e, being connected to the own input, and a second summer (s2) the first output of which, via a second delay line register (r2) which is charged with the coefficient c or f, is connected to its one input, and the other input of which is connected to the output of the first summer (s1),

– the delay time of the delay-line register (r1, r2) is equal to the period length of the clock signal (ft), and

– the correcting values (hk, vk) are stored in the read-only memories (ph, pv) as additive and/or multiplicative corrections of the coefficients a, b, c or d, e, f respectively.

**Revendications**

1. Ensemble de circuits pour la correction de déviation numérique de tubes image de télévision couleurs (fr) qui sont commandés, par l'intermédiaire de convertisseurs numérique/analogique (da), par des signaux vidéo (dv) mis en forme numériquement au moyen d'un processeur vidéo (pr), à l'entrée desquels est envoyé le signal composé de chrominance (= signal FBAS) (fb), et dans lesquels la déviation horizontale et verticale est respectivement effectuée par un oscillateur horizontal ou, respectivement, vertical (ho, vo) qui est déclenché par une impulsion de synchronisation horizontale ou, respectivement, verticale (hs, vs), par ligne ou, respectivement, par trame, et qui produit un signal en dents de scie qui doit encore être corrigé, <u>caractérisé en ce que</u> l'impulsion de synchronisation horizontale (hs) est retardée au moyen d'un étage de retard (d1), dont le retard est au moins égal à la déviation est-ouest maximum (mow), et est envoyée à l'oscillateur horizontal (ho) dont le signal en dent de scie est appliqué au tube image (fr), en ce que les signaux vidéo mis en forme (dv) sont envoyés à une mémoire (my) adressable par l'intermédiaire d'adresses d'écriture et de lecture, dont l'entrée d'adressage d'écriture (ee) est connectée à la sortie d'un générateur d'adresses d'écriture (eg) synchronisé par le signal de synchronisation (ft) et par l'impulsion de synchronisation horizontale (hs) faisant fonction d'impulsion de remise à l'état initial, et dont les entrées d'adresses de lecture (ae) sont connectées à la sortie d'un générateur d'adresses de lecture (ag) synchronisé par le signal de synchronisation (ft) et par l'impulsion de synchronisation horizontale retardée (hs') faisant fonction d'impulsion de remise à l'état initial et apparaissant à la sortie de l'étage de retard (d1), en ce que le générateur d'adresses de lecture (ag) contient un générateur parabolique horizontal numérique et un générateur parabolique vertical numérique relié à ce dernier (hp, vp), qui sont respectivement remis à l'état initial par les impulsions de synchronisation horizontale et verticale (hs, vs), et une première et une seconde mémoires mortes (ph, pv) programmables par le fabricant du téléviseur et destinées aux trois coefficients a, b, c déterminant la parabole centrale d'écran horizontale et à ses valeurs de correction (vk) dépendant du sens vertical et, respectivement, destinées aux trois coefficients (e, f, g) déterminant la parabole centrale d'écran verticale et à ses valeurs de correction dépendant du sens horizontal (hk), en ce que la mémoire (my) est suivie d'un interpolateur (ip) du nième degré (n entier supérieur à zéro) dont la valeur caractéristique d'interpolation est constituée par les positions (ls) du signal de sortie du générateur d'adresses de lecture (ag) qui excèdent le nombre d'adresses (ms) du côté le moins significatif, et dont la sortie est connectée aux convertisseurs numérique/analogique (da), et en ce que la mémoire (my) fournit simultanément à l'interpolateur (ip) du nième degré, au moyen de n+1 bus parallèles, à la suite d'une adresse, la valeur de mémoire correspondante et les valeurs de mémoire correspondant aux adresses suivantes.

2. Ensemble de circuits conforme à la revendication 1, caractérisé en ce que l'interpolateur (ip) est du premier degré (n=1) et contient les étages suivants : un premier multiplicateur (ml) dont la première entrée est connectée, par l'intermédiaire du premier bus, à la sortie de la mémoire (my) destinée à la première valeur de mémoire et dont la sortie est connectée à la première entrée d'un additionneur (ad), un second multiplicateur (m2), dont la première entrée est connectée, par l'intermédiaire du second bus, à la sortie de la mémoire (my) destinée à la seconde valeur de mémoire, et un soustracteur (sb) dont l'entrée de diminuende reçoit le chiffre un ("1") et dont l'entrée de terme soustractif reçoit, avec la seconde entrée du premier multiplicateur (ml), les positions les moins significatives (ls) du signal de sortie du générateur d'adresses de lecture (ag) et dont la sortie est reliée à la seconde entrée du second multiplicateur (m2) dont la sortie est reliée à la seconde entrée de l'additionneur (ad).

3. Ensemble de circuits pour la correction de déviation numérique de tubes image de télévision couleurs (fr) qui sont commandés, par l'intermédiaire de convertisseurs numérique/analogique (da), par des signaux vidéo (dv) mis en forme numériquement au moyen d'un processeur vidéo (pr), à l'entrée desquels est envoyé le signal composé de chrominance (= signal FBAS) (fb), et dans lesquels la déviation horizontale et verticale est respectivement effectuée par un oscillateur horizontal ou, respectivement, vertical (ho, vo) qui est déclenché par une impulsion de synchronisation horizontale ou, respectivement, verticale (hs, vs), par ligne ou, respectivement, par trame, et qui produit un signal en dents de scie qui doit encore être corrigé, caractérisé en ce que les signaux vidéo mis en forme (dv) sont envoyés à une mémoire (my) qui peut être adressée par l'intermédiaire d'adresses d'écriture et de lecture et dont la sortie est connectée au convertisseur numérique/analogique (da) dont l'entrée d'écriture d'adresse (ee) est connectée à la sortie d'un générateur d'adresses d'écriture (eg) synchronisé par le signal de synchronisation (ft) et par l'impulsion de synchronisation horizontale (hs) faisant fonction d'impulsion de remise à l'état initial et dont les sorties d'adresses de lecture (ae) sont connectées à la sortie d'un générateur d'adresses de lecture (ag) synchronisé par un signal de synchronisation auxiliaire (ht) à plus haute fréquence, en ce que ce dernier contient un générateur parabolique numérique horizontal et un générateur parabolique numérique vertical (hp, vp) relié à ce dernier, qui sont respectivement remis à l'état initial par l'impulsion de synchronisation horizontale et, respectivement, verticale (hs, vs), et des première et seconde mémoires mortes (ph, pv) programmable par le fabricant d'appareil de télévision et destinées aux trois coefficients a, b, c déterminant la parabole centrale d'écran horizontale et à ses valeurs de correction (vk) dépendant du sens vertical et, respectivement, destinées aux trois coefficients e, f, g, déterminant la parabole centrale d'écran verticale et à ses valeurs de correction (hk) dépendant du sens horizontal, et en ce que le signal de synchronisation auxiliaire à plus haute fréquence (ht) est produit au moyen d'un multiplicateur de fréquence non entier (nv) dont le multiplicateur non entier (m) est proportionnel aux positions (ls) du signal de sortie du générateur d'adresses de lecture (ag) qui excèdent le nombre d'adresses (ls) du côté le moins significatif.

4. Ensemble de circuits conforme à la revendication 3, caractérisé en ce que, pour réaliser le multiplicateur non entier (m), le multiplicateur de fréquence non entier (nv) est constitué d'un multiplicateur de fréquence (gv) entier (g) suivi d'un diviseur de fréquence (nt) non entier (p), ce qui donne : m = g/p.

5. Ensemble de circuits conforme à la revendication 1 ou 3, caractérisé en ce qu'un générateur parabolique (hp, vp) contient un premier additionneur (s1) dont l'une des entrées reçoit en permanence le coefficient a ou, respectivement, d et dont la sortie est connectée à sa propre entrée par l'intermédiaire d'un premier registre de retard (r1) chargé avec le coefficient b ou, respectivement, e, et un second additionneur (s2) dont la sortie est connectée, par l'intermédiaire d'un second registre de retard (r2) chargé avec le coefficient c ou, respectivement, f, à l'une de ses entrées et dont l'autre entrée est connectée à la sortie du premier additionneur (s1), en ce que le retard du registre de retard (r1, r2) est égal à la durée de période du signal de synchronisation (ft), et en ce que les valeurs de correction (hk, vk) sont enregistrées dans les mémoires mortes (ph, pv) sous la forme de corrections additives et/ou mutiplicatives des coefficients a, b, c, et, respectivement, d, e, f.

FIG. 3

mwa wa oa moa

mow = mwa + moa

FIG. 4

FIG. 5

FIG. 6

FIG. 7